Europäisches Patentamt

European Patent Office

Office européen des brevets

(19)

(11) Numéro de publication: **0 223 713 B1**

(12) **FASCICULE DE BREVET EUROPEEN**

(45) Date de publication du fascicule du brevet: 
21.03.90

(51) Int. Cl.⁴: **B25B 29/02**, B23P 19/06

(21) Numéro de dépôt: 86402563.0

(22) Date de dépôt: 19.11.86

(54) Procédé de serrage et/ou de desserage de boulons et dispositif permettant la mise en oeuvre du procédé.

(30) Priorité: 21.11.85 FR 8517247

(43) Date de publication de la demande:
27.05.87 Bulletin 87/22

(45) Mention de la délivrance du brevet:
21.03.90 Bulletin 90/12

(84) Etats contractants désignés:
BE DE ES GB IT LU NL

(56) Documents cités:
FR-A- 2 519 161
US-A- 3 099 075
US-A- 4 047 456

(73) Titulaire: **EG & G SEALOL: Société à Responsabilité Limitée dite, 18ter, rue des Osiers Coignieres, F-78310 Maurepas (Yvelines)(FR)**

(72) Inventeur: **Galard, Michel, 4 Clos de la Vallée verte, F-78910 Tacoignières(FR)**

(74) Mandataire: **Martin, Jean-Jacques et al, Cabinet REGIMBEAU 26, Avenue Kléber, F-75116 Paris(FR)**

ACTORUM AG

## Description

La présente invention est relative à un procédé de serrage et/ou de desserrage de boulons par extension hydraulique et au dispositif permettant la mise en oeuvre de ce procédé.

La technique d'assemblage par boulons a toujours posé et pose encore actuellement de nombreux problèmes pour ses utilisateurs, car il s'agit d'une technique mettant en oeuvre des pièces complexes ou qui, en tout cas, travaillent dans des conditions sévères. Le coût des incidents que la défaillance de ce type d'assemblage est susceptible de provoquer est hors de proportion avec le coût intrinsèque de cette technique et justifie de ce fait l'intérêt à lui apporter.

Des systèmes de mise en tension de boulons pour assurer le vissage/dévissage d'écrous ont été décrits dans le document US-A 3 099 075. Ces systèmes ne permettent cependant pas un suivi effectif de l'effort appliqué aux boulons.

Des expertises effectuées à la suite de défaillances d'assemblages boulonnés, telles que ruptures, fuites sur bride de serrage après assemblage, montrent que ces défaillances, dans leur majeure partie, sont dues à la méconnaissance de la charge ou précharge introduite dans les assemblages au niveau des boulons à l'instant du serrage proprement dit.

La précharge par mise en tension des boulons selon un profil de valeurs déterminées, fonction de la structure de l'assemblage, constitue un des paramètres essentiels de l'assemblage final. Une précharge judicieuse permet au corps du boulon de ne pas travailler en cisaillement dans le cas de sollicitations tangentielles au plan d'assemblage. Elle permet également d'assurer le maintien d'une étanchéité et conditionne les effets de desserrage spontané, sous l'action de sollicitations dynamiques de cisaillement. Elle permet enfin de mieux utiliser les caractéristiques mécaniques des boulons, donc tout en permettant d'en diminuer le diamètre et le nombre, d'obtenir en définitive une optimalisation du profil de serrage et de l'assemblage. Actuellement, on ne dispose pas de système intégré permettant le pilotage en temps réel de la mise en tension des boulons, selon un profil de serrage déterminé, en fonction de la structure de l'assemblage.

La présente invention a pour but de remédier aux inconvénients précités par la mise en oeuvre d'un procédé et d'un dispositif de serrage et/ou de desserrage de boulons dans lequel les opérations effectuées, en l'absence d'application de toute contrainte autre qu'une contrainte de traction, sont réalisées de manière entièrement automatisée.

Un autre objet de la présente invention est la mise en oeuvre d'un procédé et d'un dispositif de serrage et/ou desserrage de boulons, dans lequel l'ensemble des opérations, permettant une réduction optimale des temps d'intervention, peut être réalisé à distance, le dispositif et le procédé de l'invention pouvant donc être mis en oeuvre en environnement hostile, en particulier en environnement nucléaire.

Un autre objet de la présente invention est la mise en oeuvre d'un procédé et d'un dispositif de serrage et/ou desserrage de boulons entièrement automatisé, d'une très grande fiabilité et d'une très grande précision, l'ensemble des opérations, affranchi du facteur d'erreur humaine, au niveau de l'exécution, répondant notamment aux spécifications de l'industrie nucléaire.

Le procédé de serrage et/ou de desserrage d'un boulon dans lequel on procède à l'application d'une contrainte mécanique, en vue de provoquer un allongement préalable du boulon puis à un déplacement de l'écrou sur le boulon, selon l'invention est remarquable en ce que, après exécution d'un premier programme de vérification de l'interconnexion et de la mise en place des systèmes de serrage/desserrage sur la boulonnerie, le procédé consiste à afficher pour l'opérateur un tableau indicatif des valeurs initiales des allongements et des pressions et des valeurs de consigne d'allongement et de pression programmées, à tester par un programme de test de bon fonctionnement, les capteurs et les éléments permettant la conduite du processus de serrage et/ou desserrage proprement dit, à effectuer le serrage et/ou le desserrage proprement dit, avec analyse des valeurs reçues des capteurs d'allongement du boulon et de pression appliquée pour provoquer cet allongement, le serrage et/ou le desserrage étant effectués par asservissement de l'allongement imposé au boulon, par une contrainte mécanique appliquée à celui-ci, à une valeur de consigne et un contrôle étant effectué par corrélation entre l'allongement affiché et la pression appliquée en vue de provoquer ledit allongement, à afficher et mémoriser les valeurs d'allongement maximum et de pression finale obtenues pour le boulon considéré, à déplacer l'écrou par vissage et/ou dévissage sur le boulon correspondant, par rapport à la surface de serrage et à relâcher la contrainte appliquée.

Le dispositif objet de l'invention est indiqué à la revendication 6.

L'invention trouve application pour la réalisation d'assemblage par boulons en environnement hostile, tel que l'environnement nucléaire, dans toute industrie de construction mécanique et de construction navale.

Elle sera mieux comprise à la lecture de la description et à l'observation des dessins ci-après, dans lesquels :

- La figure 1 représente un organigramme général d'un procédé conforme à l'invention, avantageusement conduit par l'intermédiaire d'un microordinateur, cette figure étant divisée en ses parties A et B.

- La figure 2 représente, en couple longitudinale, un détail de réalisation d'un des moyens d'un dispositif conforme à l'invention,

- la figure 3 représente un schéma synoptique général du dispositif, permettant la mise en oeuvre du procédé objet de l'invention.

- la figure 4 représente une variante particulièrement avantageuse du moyen de mesure d'allongement représenté en figure 3,

- la figure 5 représente un mode de réalisation avantageux, en ce qui concerne la partie électrique, du moyen représenté en figure 4,

- la figure 6 représente un schéma synoptique d'implantation du dispositif.

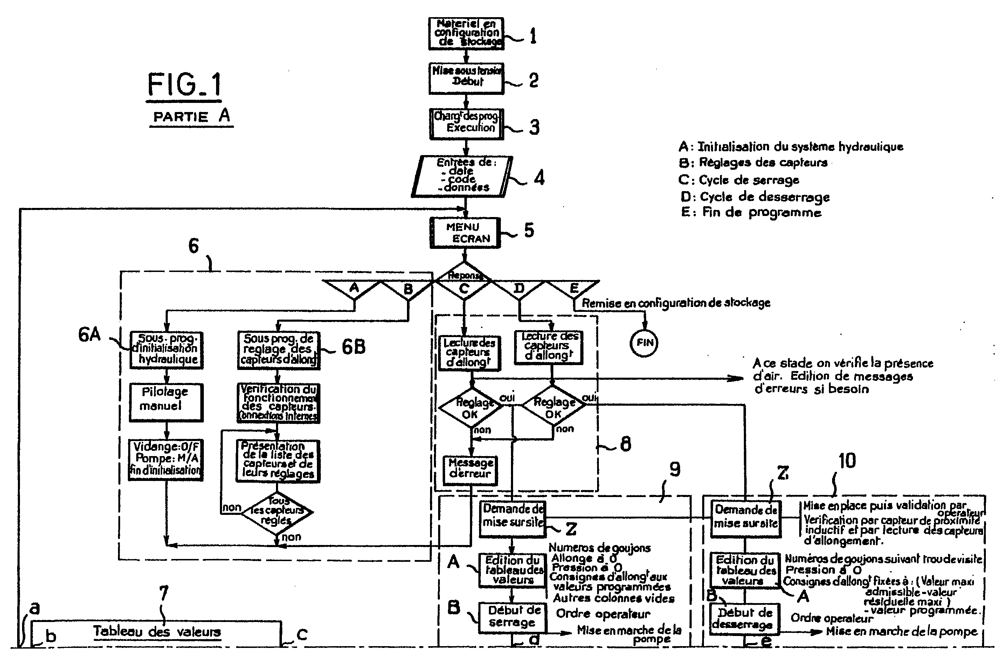

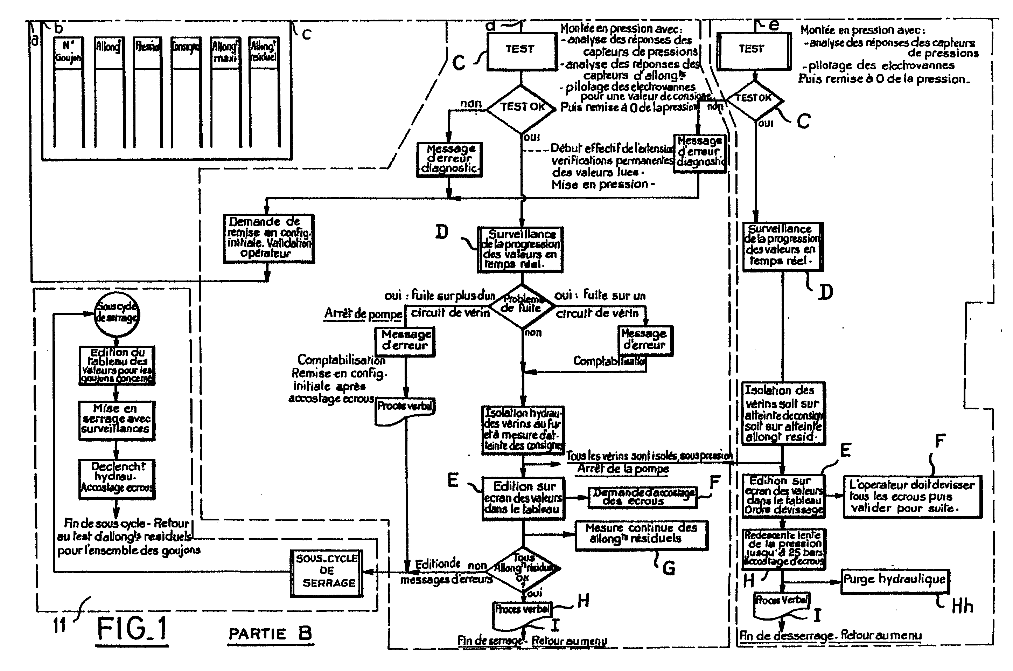

Le procédé de serrage et/ou de desserrage d'un boulon, objet de l'invention, procédé dans lequel on procède à l'application d'une contrainte mécanique en vue de provoquer un allongement préalable du boulon puis à un déplacement de l'écrou sur le boulon, sera tout d'abord décrit en liaison avec la figure 1, selon un mode de réalisation avantageux, dans lequel, la conduite du procédé est effectuée au moyen d'un microordinateur.

Bien entendu, le dispositif permettant la mise en oeuvre du procédé de l'invention, dispositif qui permet de provoquer l'allongement préalable du boulon, puis le déplacement de l'écrou sur le boulon, est un dispositif automatisé, lequel sera décrit ultérieurement dans la description.

Les phases de mise en place de vérification de l'interconnexion des systèmes de serrage et/ou de desserrage sur la boulonnerie, sont tout d'abord réalisées ainsi que représenté en 1, 2, 3, 4, 5 sur la figure 1, ces étapes correspondant par exemple à des étapes telles que les systèmes de commande hydrauliques sont connectés à la machine, la machine est alimentée en énergie électrique à partir du réseau par exemple, les programmes de commande du processus sont chargés dans la machine par l'opérateur, les données relatives par exemple à des références de site sur lequel les travaux doivent être effectués, les références de la structure de ce site sur laquelle l'opération d'assemblage doit être effectuée. Cette dernière opération est effectuée par l'opérateur, lequel entre ces différentes données sur un clavier de commande de la machine. A l'étape 5, la machine ayant enregistré les données précédemment décrites, celle-ci permet l'affichage sur un écran d'incitations issues d'un programme de type "menu" permettant à l'opérateur d'effectuer un choix parmi des opérations décrites ci-après et référencées A, B, C, D, E.

Conformément à l'objet de l'invention, après exécution d'un premier programme de vérification de l'interconnexion et de la mise en place des systèmes de serrage/desserrage sur la boulonnerie, opérations référencées 6A, 6B et 8 sur la figure 1, le procédé consiste à afficher pour l'opérateur, un tableau indicatif des valeurs initiales des allongements et des pressions et des valeurs de consigne d'allongement et de pression programmées, en vue de renseigner l'opérateur. Sur la figure 1, cette opération est représentée en 7. Puis un programme de test de bon fonctionnement des capteurs et éléments de la machine permettant la conduite du processus de serrage et/ou desserrage proprement dit, permet de tester l'ensemble des organes permettant d'effectuer le serrage et/ou le desserrage. Cette opération est représentée en 8 sur la figure 1.

Le serrage et/ou le desserrage proprement dit est ensuite effectué respectivement en 9Z et 10Z sur la figure 1, une analyse des valeurs reçues de capteurs mesurant l'allongement du boulon et de la pression appliquée pour provoquer cet allongement étant également effectuée respectivement en 9A et 10A.

Conformément à l'invention, le serrage et/ou le desserrage est effectué par asservissement de l'allongement imposé au boulon par la contrainte mécanique appliquée à celui-ci à une valeur de consigne, ces opérations étant référencées respectivement 9A, 9B, 9C, 9D et 10A, 10B, 10C, 10D sur la figure 1.

Selon une caractéristique avantageuse du procédé de l'invention, un contrôle référencé respectivement 9D, 10D est effectué au cours de la conduite du procédé par corrélation entre l'allongement affiché subi par le boulon et la pression appliquée en vue de provoquer ledit allongement. On comprendra que la corrélation effectuée, consistant en un contrôle quasi-permanent du rapport, ou de la valeur de celui-ci, de l'allongement mesuré à la pression effectivement appliquée pour obtenir cet allongement, permet d'obtenir une très bonne précision des valeurs d'allongement ainsi obtenues, ainsi que, en cas de défaut du test pour un ou plusieurs boulons, l'indication à l'opérateur d'un message d'erreur et le retour en configuration initiale ainsi qu'il apparaît clairement en figure 1. En l'absence de défaut de test, le serrage et/ou le desserrage proprement dit est poursuivi, jusqu'à atteinte de la valeur de consigne de l'allongement, un affichage et une mémorisation, référencées 9E, 10E sur la figure 1, de l'allongement maximum et de la pression finale obtenus pour chaque boulon considéré, étant alors effectués. L'écrou du boulon correspondant est alors déplacé par rapport à la surface de serrage, en vue d'effectuer le serrage et/ou le desserrage précité, par vissage et/ou dévissage sur le boulon, sur incitation affichée sur l'écran de la machine par l'opérateur. Sur la figure 1, l'incitation précitée référencée respectivement en 10F et 9F est bien entendu provoquée par le programme de type "menu" précédemment cité.

Dans le cas où le procédé de l'invention est utilisé pour la mise en oeuvre d'un serrage, ainsi que représenté en figure 1 en 9G, une mesure continue des allongements résiduels de chacun des boulons est en outre effectuée, ces mesures étant bien entendu susceptibles d'être mémorisées.

La contrainte mécanique assurant l'allongement de chacun des boulons peut alors être supprimée, ainsi qu'il apparaît en figure 1, en 9H et 10H et un procès-verbal de serrage et/ou de desserrage peut alors être édité à partir des valeurs mémorisées et des références d'identification précédemment introduites dans la machine.

Dans le cas où le procédé objet de l'invention est utilisé pour le serrage de boulons et où, pour une raison quelconque, intempestive, l'allongement du boulon ou d'un des boulons effectivement atteint est trop faible, le procédé selon une variante avantageuse de l'invention, peut également consister, ainsi qu'il est représenté en 11 en figure 1, à effectuer pour chacun des boulons concernés précités, une séquence de serrage asservi supplémentaire, séquence conduite à partir d'un sous-programme de serrage.

En outre, en présence ou en l'absence du programme de serrage supplémentaire, le procédé de l'invention peut également comporter une séquence consistant, après un temps déterminé permettant d'obtenir une bonne stabilisation des valeurs d'allongement résiduel des boulons, à effectuer un affichage, noté 9G, des valeurs de ces allongements. Un procèsverbal de serrage, 9I, peut alors être édité à partir de l'ensemble des données affichées et mémorisées. Pour un type de matériel déterminé, il est bien entendu avantageux de sauvegarder les données relatives au serrage, afin de définir un profil de serrage correspondant.

Une description plus détaillée du procédé objet de l'invention, lorsque celui-ci est utilisé essentiellement pour la mise en oeuvre du desserrage, sera maintenant donnée en relation avec la figure 1.

On remarquera bien entendu, que le procédé de l'invention peut avantageusement être mis en oeuvre, afin d'effectuer un desserrage,lorsque le ou les boulons ont été soumis à un serrage quelconque, c'est-à-dire à un serrage effectué à l'aide des moyens les plus classiques, ou au contraire lorsque le serrage préalable a été effectué conformément à la séquence décrite et représentée en 9 sur la figure 1.

Conformément au procédé de l'invention, le boulon en vue d'effectuer le desserrage est soumis, en 10D, à une contrainte de traction au moins supérieure à l'effort résiduel auquel le boulon est soumis par le serrage. Dans le cas où le boulon considéré a préalablement été soumis à un processus de serrage, mis en oeuvre conformément au procédé de l'invention, l'allongement résiduel est connu, celui-ci ayant été mémorisé au cours de la séquence de serrage déjà décrite. Au contraire, lorsque le serrage a été effectué de manière quelconque, l'allongement résiduel n'est pas connu ou pour le moins est connu de manière imprécise. Dans les deux cas, en vue d'effectuer le desserrage, le boulon est soumis à une contrainte de traction de façon à provoquer le décollement de l'écrou de la surface de serrage.

L'opérateur est alors invité sur incitation provoquée par le programme de type "menu" affiché sur la machine, à déplacer l'écrou par rapport à la surface de serrage d'une quantité déterminée par dévissage. Cette opération est notée 10F sur la figure 1. La contrainte de traction peut alors être relâchée, 10H, une purge des circuits hydrauliques permettant l'application de cette contrainte pouvant être ensuite effectuée en 10Hh.

De manière avantageuse, dans le cas où le boulon à desserrer a été soumis à un procédé de serrage conformément au procédé de l'invention, le procédé de desserrage proprement dit peut consister à soumettre le ou les boulons considérés, sensiblement aux étapes définies et utilisées pour le serrage, mais bien entendu, dans l'ordre inverse. Ainsi, après exécution d'un premier programme référencé 6A, 6B et 8 sur la figure 1, de vérification de l'interconnexion et de la mise en place des systèmes de desserrage sur la boulonnerie, le procédé, en vue d'effectuer un desserrage, peut consister à afficher en 7 pour l'opérateur un tableau indicatif des valeurs initiales des allongements et des pressions et des valeurs de consigne d'allongement et de pression programmées. Un programme permet alors de tester en 8 le bon fonctionnement des capteurs et éléments permettant la conduite du processus de desserrage proprement dit. Le desserrage proprement dit est effectué en 10, avec analyse des valeurs reçues référencées 10Z des capteurs d'allongement et de pression, le desserrage effectif en 10A, 10B, 10C, 10D est effectué par asservissement de l'allongement imposé au boulon par la contrainte appliquée à la valeur de consigne et un contrôle est effectué par corrélation entre la contrainte mécanique exercée et la pression appliquée en vue d'exercer cette contrainte. Les valeurs d'allongement maximum appliquées pour le décollement de l'écrou de la surface de serrage et de pression finale obtenue pour chaque boulon peuvent être affichées et mémorisées et l'écrou peut être déplacé par rapport à la surface de serrage, d'une quantité déterminée par dévissage. La contrainte de traction est alors relâchée.

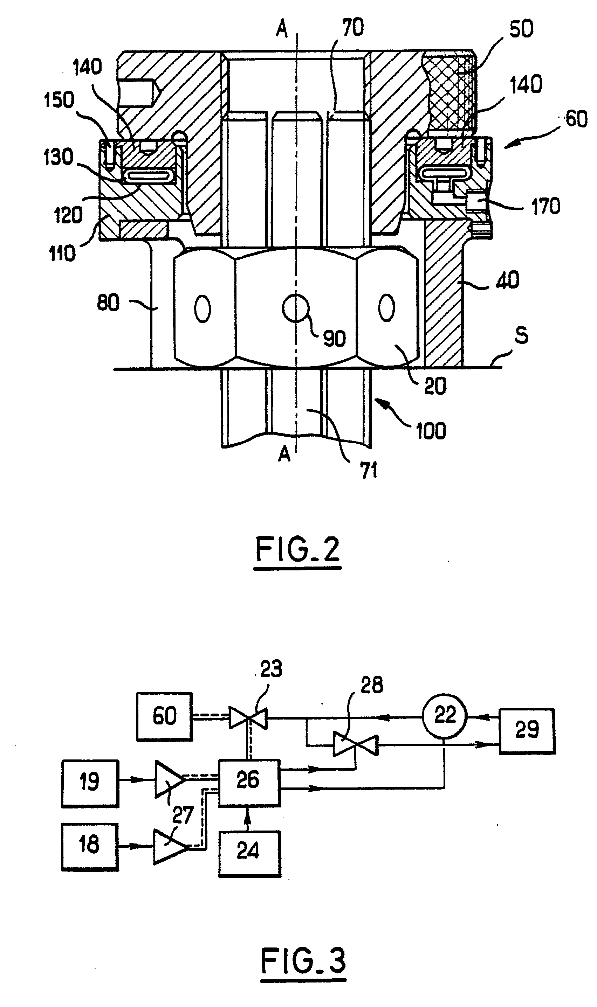

Le dispositif objet de l'invention permettant d'effectuer un serrage et/ou un desserrage d'un ou plusieurs boulons dans lequel on procède à l'application d'une contrainte mécanique, en vue de provoquer un allongement préalable du boulon puis un déplacement de l'écrou sur le boulon par rapport à la surface de serrage, sera maintenant décrit en liaison avec les figures 2 à 6.

Conformément aux figures précitées, le dispositif de l'invention comporte un système de serrage référencé 60 sur les figures 2 et 3. Le système de serrage comporte, à titre d'exemple non limitatif, ainsi que représenté plus particulièrement en figure 2, une embase 40 entourant concentriquement l'écrou, noté 20, et prenant appui sur la surface de serrage notée S. L'embase 40 est munie à sa partie opposée à la surface S d'un anneau-vérin noté 130, sur lequel prend appui la collerette 50 d'une couronne solidarisée à la partie en saillie 70 du boulon 100. De préférence, le boulon 100 est également muni d'une pige centrale notée 71, laquelle prend appui sur la base du boulon et n'est donc pas soumise à la traction. L'anneau-vérin 130 comporte une prise d'alimentation hydraulique notée 170 et est engagé dans le corps de vérin 110, de façon à mouvoir un piston en forme de couronne circulaire 140, guidé par des guides de déplacement en translation 150 selon une direction parallèle à l'axe de symétrie longitudinal AA du boulon. L'anneau-vérin 130 est engagé dans une gorge circulaire 120 ménagée dans le corps de vérin 110 et est adapté à transmettre l'effort de pression à la collerette 50, laquelle est engagée par vissage sur l'extrémité saillante 70 du boulon. L'écrou 20 est muni par exemple d'orifices 90 permettant à l'opérateur d'effectuer le vissage et/ou le dévissage de l'écrou sur le boulon, à l'aide de tout moyen adapté. Lorsque l'anneau-vérin 130 est mis et maintenu en pression, celui-ci déplace la collerette 50 et effectue la traction sur le boulon par l'intermédiaire de l'embase. Une ouverture 80 dans le corps de l'embase 40 permet à l'opérateur d'effectuer le vissage et/ou le dévissage de l'écrou 20, la valeur de consigne d'allongement du boulon étant atteinte.

Conformément au dispositif représenté en figure 3, celui-ci comporte un capteur 19 de mesure de l'allongement du boulon 100 disposé sur l'extrémité de celui-ci et dont la sortie est reliée à l'organe de commande de mise en pression de l'anneau-vérin noté 26. Le dispositif comporte en outre, de manière particulièrement avantageuse, un capteur noté 18, de mesure de pression appliquée à l'anneau-vérin 130, également relié à l'organe de commande 26. De manière avantageuse, ainsi qu'il a été décrit relativement au procédé objet de l'invention, le capteur 18 permet d'effectuer un contrôle par corrélation entre l'allongement effectif affiché et la pression appliquée à l'anneau-vérin 130, en vue de provoquer l'allongement désiré. La sortie des capteurs d'allongements 19 et de pression 18 est reliée, par l'intermédiaire de l'organe de commande 26, à un circuit de commande automatique comprenant notamment une unité centrale 24 de programmation de la valeur prédéterminée de l'allongement du boulon, et de commande de mise sous pression de stabilisation et de relâchement de la pression sur l'anneau-vérin.

Sur la figure 3, le circuit de commande automatique a été représenté comme constitué à titre d'exemple, par une pompe haute pression notée 22, alimentant le système de serrage 60 au niveau de la prise hydraulique 170, par l'intermédiaire d'une électrovanne 23, l'électro-vanne et la pompe 22 étant commandées par l'organe de commande 26. En outre, une électro-vanne de purge 28 a été prévue afin de permettre, notamment, la vidange des circuits hydrauliques et de l'anneau-vérin 130, en fin de séquence de serrage et/ou de desserrage. L'électrovanne de purge 28 est reliée à un réservoir tampon destiné à recevoir le fluide de mise en pression, le réservoir tampon noté 29, étant en outre, relié en retour à la pompe 22. Des amplificateurs 27 permettent après amplification des signaux délivrés par les capteurs 18 et 19, une commande en puissance des organes hydrauliques, par l'intermédiaire de l'organe de commande 26.

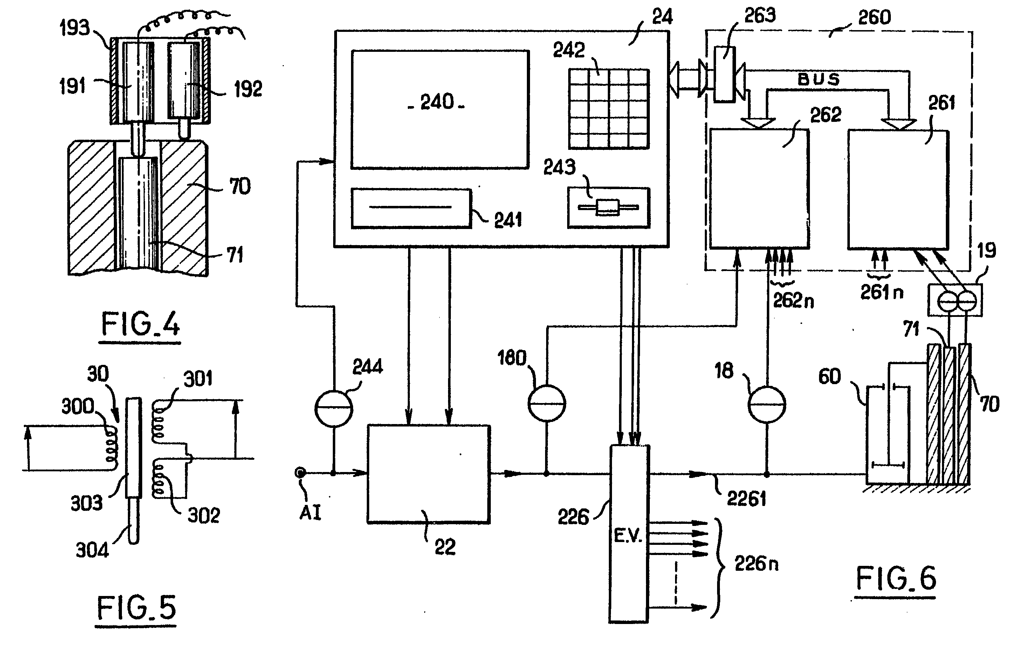

Selon une caractéristique particulièrement avantageuse du dispositif, le capteur 19 de mesure d'allongement comporte deux capteurs notés 191 et 192 sur la figure 4, ces capteurs étant appariés. Par capteurs appariés, on entend des capteurs de même type, présentant des caractéristiques de transfert déplacement ou allongement/signal de sortie sensiblement identiques, les capteurs précités pouvant avantageusement être issus d'un même lot de fabrication. L'un des capteurs est en contact avec la partie centrale du boulon 100, la pige 71, et l'autre capteur est en contact avec la face supérieure de l'extrémité saillante 70 du boulon. Les deux capteurs 191 et 192 sont agencés de façon que la mesure différentielle des indications d'allongement des deux capteurs repré sente l'allongement réel du boulon par rapport à la pige. Ainsi que représenté en outre en figure 4, les deux capteurs 191 et 192 sont liés mécaniquement et couplés thermiquement par une protection 193, de façon à ce que les capteurs soient soumis simultanément à toute variation éventuelle de température.

Selon une autre caractéristique avantageuse, les capteurs 191 et 192 sont thermiquement compensés. Dans ce but, ainsi qu'il apparaît en figure 5, les capteurs 191 et 192 peuvent être constitués par un transformateur 30 muni d'un enroulement primaire 300, de deux enroulements secondaires 301 et 302, identiques et en opposition, mais connectés en série, le transformateur 30 comprenant en outre un noyau plongeur noté 303, solidaire d'un doigt de contact noté 304. Le primaire du transformateur 30 est alimenté en courant alternatif, à basse tension par exemple. Le déplacement du noyau plongeur 303 permet en faisant varier le couplage du primaire et du secondaire de donner une tension au secondaire représentative du déplacement du doigt de contact 304 et donc de l'allongement du boulon, le signal donné par le capteur 191 servant de référence à la mesure de cet allongement.

Une description plus détaillée de l'implantation des constituants du dispositif objet de l'invention, tel que représenté en figure 3, sera maintenant donnée en liaison avec la figure 6.

Conformément à cette figure, les capteurs 18 et 19 sont reliés à l'unité centrale, par l'intermédiaire d'une centrale de mesure 260 des allongements et des pressions, la centrale de mesure 260 pouvant être localisée dans l'organe de commande 26 représenté en figure 3. La centrale de mesure des allongements et de pressions 260, peut comporter ainsi que représenté en figure 6, une carte de mesure 261 des allongements, à laquelle sont reliés les capteurs de mesure d'allongement 19, un seul capteur relatif à un boulon 70 étant représenté sur la figure 6, les autres capteurs, relatifs à d'autres boulons, pouvant être connectés aux entrées référencées 261n. Sur cette même figure 6, le système de serrage 60 est représenté symboliquement relié à un ensemble de commande hydraulique 226 comportant une pluralité de vannes hydrauliques, une vanne étant susceptible de commander le système de serrage 60 par une conduite notée 2261, et les autres systèmes de serrage, relatifs à d'autres boulons et non représentés en figure 6, pouvant être commandés par les sorties notées 226n de l'ensemble de commande 226. La centrale de mesure 260 comporte en outre une carte de mesure 262 de pression, à laquelle sont reliés les capteurs de mesure de pression 18. Sur la figure 6, un seul capteur de mesure de pression 18 est représenté, les autres capteurs relatifs à la mesure de la pression appliquée au système de serrage 60 associé aux autres boulons, n'étant pas représenté. Ces autres capteurs 18, peuvent bien entendu être reliés aux entrées 262n de la carte 262. En outre, un capteur de pression 180 permet de mesurer la pression effectivement disponible, en sortie de la pompe 22, le capteur étant relié à une entrée particulière, non référencée, de la carte 262 et permettant le contrôle du fonctionnement de la pompe hydraulique 22. Un capteur 244 permet également de mesurer la pression d'alimentation de la pompe 22 en fluide hydraulique, cette alimentation étant effectuée par une buse d'entrée notée AI. A titre d'exemple non limitatif, les capteurs de pression 18, 180 et 224 peuvent être constitués par des jauges de contrainte montées en pont et convenablement soumises à la pression du fluide considéré.

A titre d'exemple non limitatif, chacune des cartes de mesure 261 et 262 peut comporter des moyens échantillonnés de conversion analogique-numérique, délivrant les signaux délivrés par les capteurs de mesure d'allongement et de pression précités, sous forme numérique. Un multiplexeur 263 est également prévu, de façon à permettre, à partir de l'unité centrale 24, une lecture séquentielle des valeurs numériques précitées, le multiplexeur 263, l'unité centrale 24 et les cartes de mesure 261 et 262 étant reliées par une liaison du type BUS.

Bien entendu, l'unité centrale 24 comporte de manière non limitative, des unités périphériques telles que par exemple un clavier 242, une imprimante 241, un écran de visualisation 240 et un lecteur de disques magnétiques 243. L'unité centrale 24 est bien entendu connectée au capteur de pression 244 par l'intermédiaire par exemple d'un convertisseur analogique-numérique et d'une prise de liaison série du type RS232, ou analogue, à l'ensemble de commande 226, par l'intermédiaire de carte de commande de puissance des vannes non représentées sur la carte, ainsi qu'à la pompe hydraulique 22, en vue de la commande de celle-ci. De manière avantageuse, l'unité centrale 24 comprend une mémoire permanente, permettant de conduire le procédé, objet de l'invention, conformément aux séquences précédemment décrites.

Bien entendu, la mémoire permanente peut être constituée par les disques magnétiques précités sur lesquels le programme du type "menu" déjà décrit est enregistré. Elle peut également, de manière préférentielle, mais non limitative, être constituée par une mémoire morte programmable électriquement EPROM, directement implantée sur la carte mère de l'unité centrale.

De préférence mais de façon non limitative, la mémoire permanente est programmée de façon à permettre la conduite du procédé selon les séquences non limitatives ci-après :
- affichage, pour l'opérateur, d'un tableau indicatif des valeurs initiales des allongements et des pressions et des valeurs de consigne d'allongement et de pression programmées,
- test par un programme de test de bon fonctionnement des capteurs et des éléments permettant la conduite du processus de serrage et/ou de desserrage proprement dit, avec analyse des valeurs reçues des capteurs d'allongement du boulon et de pression appliquée pour provoquer cet allongement, le serrage et/ou le desserrage étant effectués par asservissement de l'allongement imposé au boulon, par une contrainte mécanique appliquée à celui-ci, à une valeur de consigne et un contrôle étant effectué par corrélation entre l'allongement affiché et la pression appliquée en vue de provoquer ledit allongement,
- affichage et mémorisation des valeurs d'allongement maximum et de pression finale obtenues pour le boulon considéré,
- déplacement de l'écrou sur le boulon correspondant, par vissage et /ou dévissage, par rapport à la surface de serrage,
- relâchement de la contrainte appliquée.

Bien entendu, la mémoire permanente peut avantageusement être programmée de façon à comporter également tout programme complémentaire ou sousprogramme, permettant le déroulement du procédé objet de l'invention, conformément à l'organigramme de la figure 1 précédemment décrite.

Le procédé et le dispositif objet de l'invention ont été mis en oeuvre, après réalisation, et ont donnés une totale satisfaction. Ainsi, on a pu effectuer des assemblages selon des profils de serrage les plus divers, en fonction de la structure des pièces à assembler, l'allongement résiduel des boulons effectivement obtenu l'ayant été avec une précision de ± 0,005 millimètre. Un tel degré de précision associé à un haut degré d'automatisation, tant du procédé de l'invention du dispositif précédemment décrit, a pu être obtenu en raison du contrôle simultané et de la corrélation correspondante entre la variation de l'allongement et de pression effectivement appliquée au moyen de serrage, par deux systèmes autonomes d'asservissement, le haut degré de précision déjà cité relativement à l'allongement, étant en outre stable sur une large gamme de températures en raison de la structure particulière des capteurs. Bien entendu, l'asservissement de l'allongement ou de la pression appliquée pour obtenir celui-ci, peut indifféremment être utilisé pour la conduite du procédé de l'invention, le deuxième asservissement, indépendant, servant alors de référence pour le premier pour effectuer la corrélation précitée.

Le procédé et le dispositif de l'invention en raison du très grand degré de précision de mise en oeuvre de l'allongement résiduel des boulons sont particulièrement adaptés à une utilisation dans le domaine de l'industrie nucléaire et en particulier pour le serrage de cuve, le serrage des trous de visite et les serrages sur échangeurs ainsi qu'à tout desserrage.

## Revendications

1. Procédé de serrage et/ou de desserrage d'un boulon, dans lequel on procède à l'application d'une contrainte mécanique, en vue de provoquer un allongement préalable du boulon puis à un déplacement de l'écrou sur le boulon, dans lequel après exécution d'un premier programme de vérification de l'interconnexion et de la mise en place des systèmes de serrage/desserrage (6A, 6B et 8) sur la boulonnerie ledit procédé consiste:
   – à afficher (7), pour l'opérateur, un tableau indicatif des valeurs initiales des allongements et des pressions et des valeurs de consigne d'allongement et de pression programmées,
   – à tester (8) par un programme de test de bon fonctionnement les capteurs et les éléments permettant la conduite du processus de serrage et/ou desserrage proprement dit,
   – à effectuer (9, 10) le serrage et/ou le desserrage proprement dit avec analyse (9Z, 10Z) des valeurs reçues des capteurs d'allongement du boulon et de pression appliquée pour provoquer cet allongement, le serrage et/ou le desserrage (9(A, B, C, D)) (10(A, B, C, D)) étant effectués par asservissement de l'allongement imposé au boulon

par une contrainte mécanique appliquée à celui-ci, à une valeur de consigne et un contrôle (9D, 10D) étant effectué par corrélation entre l'allongement affiché et la pression appliquée en vue de provoquer ledit allongement,

– à afficher (9E, 10E) et mémoriser les valeurs d'allongement maximum et de pression finale obtenues pour le boulon considéré,

– à déplacer l'écrou (9F, 10F) par vissage et/ou dévissage par rapport à la surface de serrage sur le boulon correspondant,

– à relâcher la contrainte appliquée (9H, 10H).

2. Procédé selon la revendication 1, dans lequel dans le cas où l'allongement du boulon effectivement atteint, au cours du serrage, est trop faible, ledit procédé consiste:

– à effectuer pour chacun des boulons précités un serrage asservi supplémentaire (11),

– après un temps déterminé, pour une bonne stabilisation des valeurs d'allongement résiduel des boulons, à effectuer un affichage (9G) des valeurs d'allongement,

– à éditer un procès verbal de serrage (9I) à partir de l'ensemble des données affichées et mémorisées,

– à sauvegarder, pour un type de matériel déterminé, les données relatives au serrage afin de définir un profil de serrage correspondant.

3. Procédé selon la revendication 1, dans lequel, lorsque le boulon a été soumis à un serrage quelconque et en vue d'effectuer un desserrage, ledit procédé consiste:

– à soumettre le boulon (10D) à une contrainte de traction, au moins supérieure à l'effort résiduel auquel le boulon est soumis par le serrage, de façon à provoquer le décollement de l'écrou de la surface de serrage,

– à déplacer l'écrou (10F) par rapport à la surface de contact d'une quantité déterminée par dévissage,

– à relâcher la contrainte de traction (Hh).

4. Procédé selon la revendication 3, dans lequel ledit boulon à desserrer ayant été soumis à un procédé de serrage selon l'une des revendications 1 ou 2, ledit procédé consiste à soumettre ledit boulon sensiblement aux étapes du serrage proprement dit mais dans l'ordre inverse pour effectuer le desserrage proprement dit.

5. Procédé selon l'une des revendications 3 ou 4, dans lequel, après exécution d'un premier programme (6A, 6B, 8) de vérification de l'interconnexion et de la mise en place des systèmes de desserrage sur la boulonnerie, en vue d'effectuer un desserrage, ledit procédé consiste:

– à afficher (7), pour l'opérateur, un tableau indicatif des valeurs initiales des allongements et des pressions et des valeurs de consigne d'allongement et de pression programmées,

– à tester (8) par un programme de test de bon fonctionnement les capteurs et éléments permettant la conduite du processus de desserrage proprement dit,

– à effectuer (10) le desserrage proprement dit avec analyse des valeurs reçues (10Z) des capteurs d'allongement et de pression, le desserrage (10A, B, C, D) étant effectué par asservissement de l'allongement imposé au boulon par la contrainte appliquée à la valeur de consigne et un contrôle étant effectué par corrélation entre la contrainte mécanique exercée et la pression appliquée en vue d'exercer ladite contrainte,

– à afficher et mémoriser les valeurs d'allongement maximum appliquées au décollement de l'écrou de la surface de serrage et de pression finale obtenues pour chaque boulon,

– à déplacer (10F) les écrous correspondants par rapport à la surface de serrage d'une quantité déterminée par dévissage,

– à relâcher la contrainte de traction.

6. Dispositif permettant d'effectuer un serrage et/ou un desserrage d'un boulon (100) dans lequel on procède à l'application d'une contrainte mécanique en vue de provoquer un allongement préalable du boulon puis à un déplacement de l'écrou sur le boulon par rapport à la surface de serrage, ledit dispositif comprenant des moyens de serrage (60) du boulon, caractérisé en ce qu'il comporte:

– un capteur (19) de mesure de l'allongement du boulon (100) disposé sur l'extrémité du boulon et dont la sortie est reliée à l'organe de commande de mise en pression de l'anneau-vérin,

– un capteur (18) de mesure de pression appliquée à l'anneau-vérin de façon à permettre un contrôle par corrélation entre l'allongement effectif affiché et la pression appliquée en vue de provoquer ledit allongement, la sortie des capteurs d'allongement et de pression étant reliée à un circuit de commande automatique comprenant notamment une unité centrale (24) de programmation de la valeur prédéterminée de l'allongement du boulon et de commande de mise sous pression, de stabilisation et de relâchement de ladite pression sur l'anneau-vérin.

7. Dispositif selon la revendication 6, caractérisé en ce que les moyens de serrage (60) comportent une embase (40) entourant concentriquement l'écrou et prenant appui sur la surface (S) à serrer, l'embase (40) étant munie à sa partie opposée à ladite surface d'un anneau-vérin (130) sur lequel prend appui la collerette (50) d'une couronne solidarisée à la partie en saillie (70) du boulon (100), de façon telle que l'anneau-vérin (130), lorsqu'il est mis et maintenu en pression, déplace ladite collerette (50) et effectue la traction sur le boulon par l'intermédiaire de l'embase.

8. Dispositif selon la revendication 6, caractérisé en ce que le capteur (19) de mesure d'allongement comporte deux capteurs (191, 192) appariés, l'un des capteurs étant en contact avec la partie centrale du boulon (100) et l'autre capteur étant en contact avec la face supérieure de celui-ci, les deux capteurs étant agencés de façon que la mesure différentielle des indications d'allongement des deux capteurs représente l'allongement réel du boulon.

9. Dispositif selon la revendication 8, caractérisé en ce que les deux capteurs sont liés mécaniquement et couplés thermiquement.

10. Dispositif selon l'une des revendications 8 ou 9, caractérisé en ce que les capteurs (191, 192) sont constitués par un transformateur (30) muni d'un enroulement primaire (300), de deux enroulements secondaires (301, 302) identiques en opposition connectés en série et d'un noyau plongeur mécaniquement solidaire d'un doigt de contact.

11. Dispositif selon la revendication 8, caractérisé en ce que les capteurs (18, 19) sont reliés à l'unité centrale (24) par l'intermédiaire d'une centrale de mesure (260) des allongements et des pressions, la centrale de mesure des allongements et des pressions comprenant:

– une carte de mesure (261) des allongements à laquelle sont reliés les capteurs de mesure d'allongement,

– une carte de mesure (262) de pression à laquelle sont reliés les capteurs de mesure de pression, chacune des cartes précitées comportant des moyens échantillonnés de conversion analogique-numérique, délivrant les signaux délivrés par les capteurs de mesure d'allongement et de de pression sous forme numérique,

– un multiplexeur (263) de lecture séquentielle des valeurs numériques précitées.

12. Dispositif selon la revendication 11, caractérisé en ce que l'unité centrale comprend une mémoire permanente, permettant de conduire le procédé selon les séquences ci-après:

– affichage, pour l'opérateur, d'un tableau indicatif des valeurs initiales des allongements et des pressions et des valeurs de consigne d'allongement et de pression programmées,

– test par un programme de test de bon fonctionnement des capteurs et des éléments permettant la conduite du processus de serrage et/ou desserrage proprement dit avec analyse des valeurs reçues des capteurs d'allongement du boulon et de pression appliquée pour provoquer cet allongement, le serrage et/ou le desserrage étant effectués par asservissement de l'allongement imposé au boulon, par une contrainte mécanique appliquée à celui-ci, à une valeur de consigne et un contrôle étant effectué par corrélation entre l'allongement affiché et la pression appliquée en vue de provoquer ledit allongement,

– affichage et mémorisation des valeurs d'allongement maximum et de pression finale obtenues pour le boulon considéré,

– déplacement de l'écrou sur le boulon correspondant, par vissage et/ou dévissage, par rapport à la surface de serrage,

– relâchement de la contrainte appliquée.

13. Dispositif selon la revendication 12, caractérisé en ce que ladite mémoire permanente est constituée par une mémoire morte programmable électriquement.

14. Dispositif selon l'une des revendications 12 ou 13, caractérisé en ce que outre les séquences définies dans la revendication 12, ladite mémoire permanente permet la conduite dudit procédé selon les séquences des revendications 2 à 5.

**Claims**

1. Process for tightening and/or loosening a bolt, in which the step is taken of applying a mechanical constraint with the aim of causing an initial elongation of the bolt then displacing the nut on the bolt, in which after execution of a first program of verification of the interconnection and installation of the tightening/loosening system (6A, 6B, and 8) on the nut and bolt assembly, the said process comprises:

- displaying (7), to the operator, a table indicating the initial values of the elongations and pressures and the programmed required values of elongation and pressure,

- testing (8) by means of a test program the correct operation of the sensors and the elements which allow the performance of the actual process of tightening and/or loosening,

- effecting (9, 10) the actual tightening and/or loosening with analysis (9Z, 10Z) of the values obtained from the sensors of the elongation of the bolt and the pressure applied to cause this elongation, the tightening and/or loosening (9 (A, B, C, D)), (10 (A, B, C, D)) being effected by controlling the elongation imposed on the bolt by a mechanical constraint applied to the latter, to a preset value, and a control (9D, 10D) being effected by correlation between the elongation displayed and the pressure applied to cause the said elongation,

- displaying (9E, 10E) and memorising the values of the maximum elongation and the final pressure obtained for the bolt under consideration,

- displacing the nut (9F, 10F) by screwing and/or unscrewing with respect to the engaging surface of the corresponding bolt,

- relaxing the applied constraint (9H, 10H).

2. Process according to claim 1, in which, in the event that the elongation of the bolt which is effectively achieved in the course of tightening is too small, the said process comprises:

- effecting for each of the said bolts a supplementary controlled tightening step (11),

- after a predetermined time, for good stabilisation of the residual elongation values of the bolts, effecting display (9G) of the value of the elongation,

- editing a record of tightening (9I) starting with the assembly of the given values displayed and memorised,

- maintaining storing, for a predetermined type of material, the given values relating to tightening with the aim of defining a corresponding tightening sequence.

3. Process according to claim 1, in which, when the bolt has been subjected to any tightening and with the aim of effecting a loosening operation, the said process comprises:

- submitting the bolt (10D) to a tractive constraint at least greater than the residual stress to which the bolt was subjected by the tightening operation, such as to cause disengagement of the nut from the engaged surface,

- displacing the nut (10F) with respect to the contact surface by a predetermined amount by unscrewing,

- relaxing the tractive constraint (Hh).

4. Process according to claim 3, in which, the said bolt to be loosened having been subjected to a tightening process according to one of claims 1 or 2, the said process consists of submitting the said bolt substantially to the actual tightening steps but in the inverse order to effect the actual loosening.

5. Process according to one of claims 3 or 4, in which, after execution of a first program (6A, 6B, 8) of verification of the interconnection and the installation of the loosening system on the nut and bolt assembly, with the aim of effecting loosening, the said process comprises:
- displaying (7) to the operator a table indicating the initial values of the elongations and pressures and programmed required values of elongation and pressure,
- testing (8) by a test program the correct functioning of the sensors and elements allowing performance of the said loosening process,
- effecting (10) the actual loosening with analysis of the values (10Z) received from the sensors of elongation and pressure, the loosening (10A, B, C, D) being effected by controlling the elongation imposed on the bolt by the applied constraint to the pre-set value and a control being effected by correlation between the mechanical constraint exercised and the pressure applied to cause the said constraint,
- displaying and memorising the values of maximum applied elongation to the disengagement of the nut from the engaged surface and the final pressure obtained by each bolt,
- displacing (10F) the corresponding nut with respect to the engaged surface by a predetermined amount by unscrewing,
- relaxing the tractive constraint.

6. Apparatus for performing a tightening and/or loosening operation on a bolt (100) in which one proceeds by applying a mechanical constraint with the aim of causing an initial elongation of the bolt then displacing the nut on the bolt with respect to the tightening surface, the said apparatus comprising bolt-tightening means (6), characterised in that it comprises:
- a sensor (19) measuring the elongation of the bolt (100), disposed on the end of the bolt and of which the output is connected to the control member which applies pressure to the ring jack,
- a sensor (18) measuring the pressure applied to the ring jack in such a way as to allow control by correlation between the effective elongation displayed and the pressure applied to cause the said elongation, the output of the elongation and pressure sensors being connected to an automatic control circuit comprising primarily a central programming unit (24) for the predetermined value of the elongation of the bolt and controlling the application of the pressure, stabilisation and relaxation of the said pressure on the ring jack.

7. Apparatus according to claim 6, characterised in that the tightening means (60) comprise a base (40) surrounding the nut concentrically and abutting against the engaging surface (S), the base (40) being provided on that part of it which is opposite the said surface with a ring jack (130) on which abuts the collar (50) of a crown secured to the projecting part (70) of the bolt (100), in a manner such that the ring jack (130) when it is put and maintained under pressure, displaces the said collar (50) and causes traction to be applied to the bolt through the intermediary of the base.

8. Apparatus according to claim 6, characterised in that the sensor (19) measuring the elongation comprises two matched sensors (191, 192) one of the sensors being in contact with the central part of the bolt (100) and the other sensor being in contact with the top face of the latter, the two sensors being operated in a way such that the differential measure of the indications of elongation of the two sensors represents the true elongation of the bolt.

9. Apparatus according to claim 8, characterised in that the two sensors are linked together mechanically and coupled thermally.

10. Apparatus according to one of claims 8 or 9, characterised in that the sensors (191, 192) are constituted by a transformer (30) provided with a primary winding (300), two identical secondary windings (301, 302) connected in series in opposition and a plunger core mechanically connected to a contact finger.

11. Apparatus according to claim 8, characterised in that the sensors (18, 19) are connected to the central unit (23) through the intermediary of a central measuring unit (260) for elongations and pressures, the central measuring unit for elongations and pressures comprising
- a measuring circuit (261) for the elongation to which are connected the elongation-measuring sensors,
- a measuring circuit (262) for the pressure to which are connected the pressure-measuring sensors, each of the said circuits comprising sampled analogue-numerical conversion means delivering the signals delivered by the sensors measuring elongation and pressure in numerical form,
- a multiplexer (263) read sequentially for the said numerical values.

12. Apparatus according to claim 11, characterised in that the central unit comprises a permanent memory allowing conduct of the process to be conducted in accordance with the following sequences:
- display to the operator of a table indicating initial values of the elongation and pressure and programmed required values of elongation and pressure,
- testing by a test program the correct functioning of the sensors and elements allowing performance of the said tightening and/or loosening process with analysis of the values received from the sensors of elongation of the bolt and of pressure applied to cause the elongation, the tightening and/or loosening being effected by controlling the elongation imposed on the bolt by a mechanical constraint applied to it, to a pre-set value and a control being effected by correlation between the elongation displayed and the pressure applied to cause the said elongation,
- displaying and memorising maximum elongation values and final pressure obtained for the bolt under consideration,
- displacing the nut on the associated bolt by screwing and/or unscrewing with respect to the engaging surface,
- relaxing the applied constraint.

13. Apparatus according to claim 12, characterised in that the said permanent memory is constituted by an electrically programmable read-only memory.

14. Apparatus according to one of claims 12 or 13, characterised in that besides the sequence defined in claim 12, the said permanent memory allows the performance of the said process according to the sequences in claims 2 to 5.

## Patentansprüche

1. Verfahren zum Anziehen und/oder Lösen eines Bolzens, bei dem man das Anlegen einer mechanischen Spannung vornimmt, um eine vorläufige Dehnung des Bolzens herbeizuführen, anschließend eine Verschiebung der Mutter auf dem Bolzen, wobei nach Ausführung eines ersten Programms zur Kontrolle der Verbindung und des Instellungbringens der Systeme zum Anziehen/Lösen (6A, 6B und 8) auf der Bolzenanlagen besagtes Programm darin besteht:
    - für einen Operator eine Tabelle darzustellen (7), welche die Anfangswerte der Dehnungen und der Drücke und die programmierten Sollwerte für Dehnung und Druck anzeigt,
    - durch ein Testprogramm für einwandfreies Funktionieren die Meßfühler und die Elemente, welche die Durchführung des eigentlichen Anzieh- und/oder Löseprozesses ermöglichen, zu testen (8),
    - das eigentliche Anziehen und/oder Lösen auszuführen (9, 10), mit Analyse (9Z, 10Z) der von den Meßfühlern abgenommenen Werte der Dehnung des Bolzens und des angelegten Drucks, um diese Dehnung herbeizuführen, wobei das Anziehen und/oder das Lösen (9 [A, B, C, D]) (10 [A, B, C, D]) durch Regeln der Dehnung, die auf den Bolzen durch eine daran angelegte mechanische Spannung aufgebracht wird, auf einen Sollwert ausgeführt wird und eine Kontrolle (9D, 10D) durch Korrelation zwischen der angezeigten Verlängerung und dem Druck, der zum Herbeiführen besagter Dehnung angelegt ist, ausgeführt wird,
    - die Werte der maximalen Dehnung und des Enddruckes, die für den betreffenden Bolzen erhalten werden, darzustellen (9E, 10E) und zu speichern,
    - die Mutter durch Fest- und/oder Losschrauben bezüglich der Anziehfläche auf dem entsprechenden Bolzen zu verschieben (9F, 10F),
    - die angelegte Spannung zu lösen (9H, 10H).

2. Verfahren nach Anspruch 1, dadurch gekennzeichnet, daß in dem Fall, in dem die effektiv im Verlauf des Anziehvorgangs erreiohte Dehnung des Bolzens zu schwach ist, besagtes Verfahren darin besteht:
    - für jeden der vorgenannten Bolzen einen zusätzlichen geregelten Anziehvorgang (11) auszuführen,
    - für eine gute Stabilisierung der Werte der restlichen Dehnung der Bolzen nach einer bestimmten Zeit eine Darstellung (9G) der Dehnungswerte auszuführen,
    - ausgehend von der Gesamtheit der dargestellten und gespeicherten Daten ein Protokoll des Anziehvorganges (9I) auszudrucken,
    - für einen bestimmten Materialtyp die auf den Anziehvorgang bezogenen Daten zu sichern, um ein Profil des entsprechenden Anziehvorganges festzulegen.

3. Verfahren nach Anspruch 1, dadurch gekennzeichnet, daß, wenn der Bolzen irgendeinem Anziehvorgang unterworfen worden ist und im Hinblick auf das Ausführen des Lösevorganges, besagtes Verfahren darin besteht:
    - den Bolzen einer Zugspannung zu unterwerfen (10D) die zumindest größer ist als die Restspannung, welcher der Bolzen durch das Anziehen unterworfen wird, so daß die Ablösung der Mutter von der Anziehfläche herbeigeführt wird,
    - die Mutter bezüglich der Kontaktfläche um ein bestimmtes Stück durch Losschrauben zu verschieben (10F),
    - die Zugspannung zu lösen (Hh).

4. Verfahren nach Anspruch 3, bei dem besagter zu lösender Bolzen einem Anziehvorgang nach einem der Ansprüche 1 oder 2 unterworfen worden ist, dadurch gekennzeichnet, daß besagtes Verfahren darin besteht, besagten Bolzen merklich den Schritten des eigentlichen Anziehvorganges zu unterwerfen, aber in umgekehrter Reihenfolge, um den eigentlichen Lösevorgang auszuführen.

5. Verfahren nach einem der Ansprüche 3 oder 4, dadurch gekennzeichnet, daß, nach Ausführung eines ersten Programms (6A, 6B, 8) der Kontrolle der Verbindung und des Instellungbringens der Systeme zum Lösen auf der Bolzenanlage, im Hinblick auf die Ausführung eines Lösevorganges, besagtes Verfahren darin besteht:
    - für den Operator eine Tabelle darzustellen (7), welche die Anfangswerte der Dehnungen und der Drücke und die programmierten Sollwerte von Dehnung und Druck anzeigt,
    - durch ein Testprogramm für einwandfreies Funktionieren die Meßfühler und die Elemente, welche die Durchführung des eigentlichen Lösevorgangs ermöglichen, zu testen (8),
    - das eigentliche Lösen auszuführen (10), mit Analyse der von den Meßfühlern abgenommenen (10Z) Werte von Dehnung und Druck, wobei das Lösen (10A, B, C, D) durch Regeln der Dehnung, die durch die angelegte Spannung auf den Bolzen aufgebracht ist, auf den Sollwert ausgeführt wird und eine Kontrolle durch Korrelation zwischen der ausgeübten mechanischen Spannung und dem angelegten Druck, um besagte Spannung auszuüben, ausgeführt wird,
    - die Werte der maximalen Dehnung, aufgebracht für das Lösen der Mutter von der Anziehfläche, und des Enddrucks, die für jeden Bolzen erhalten werden, darzustellen und zu speichern,
    - die entsprechenden Muttern bezüglich der Anziehfläche um ein bestimmtes Stück durch Losschrauben zu verschieben (10F),
    - die Zugspannung zu lösen.

6. Vorrichtung um Anziehen und/oder Lösen eines Bolzens (100), bei der man das Anlegen einer mechanischen Spannung vornimmt, um eine vorläufige Dehnung des Bolzens herbeizuführen, anschließend eine Verschiebung der Mutter auf dem Bolzen bezüglich der Anziehfläche, wobei besagte Vorrichtung Anziehmittel (60) für den Bolzen umfaßt, gekennzeichnet durch:

– einen Meßfühler (19) zum Messen der Dehnung des Bolzens (100), der am Ende des Bolzens angeordnet ist und dessen Ausgang mit der Steuereinheit für die Druckbeaufschlagung des Zylinderrings verbunden ist,

– einen Meßfühler (18) zum Messen des an den Zylinderring angelegten Drucks, so daß eine Kontrolle durch Korrelation zwischen der angezeigten effektiven Dehnung und dem angelegten Druck, um besagte Dehnung herbeizuführen, ermöglicht wird, wobei der Ausgang der Meßfühler für Dehnung und Druck mit einem automatischen Steuerschaltkreis verbunden ist, der insbesondere eine Zentraleinheit (24) für die Programmierung des vorgegebenen Wertes der Bolzendehnung und für die Steuerung der Druckbeaufschlagung, der Stabilisierung und des Lösens besagten Drucks auf den Zylinderring umfaßt.

7. Vorrichtung nach Anspruch 6, dadurch gekennzeichnet, daß die Anziehmittel (60) einen Sockel (40) umfassen, welcher die Mutter konzentrisch umgibt und sich auf der Anziehfläche (S) abstützt, wobei der Sockel (40) an seiner besagter Fläche gegenüberliegenden Seite mit einem Zylinderring (130) versehen ist, auf den sich der Bund (50) einer am überstehenden Teil (70) des Bolzens (100) befestigten Krone abstützt, so daß der Zylinderring (130), wenn er mit Druck beaufschlagt und unter Druck gehalten wird, besagten Bund (50) verschiebt und die Zugspannung mit Hilfe des Sockels auf den Bolzen ausübt.

8. Vorrichtung nach Anspruch 6, dadurch gekennzeichnet, daß der Meßfühler (19) zum Messen der Dehnung zwei gepaarte Meßfühler (191, 192) umfaßt, wobei einer der Meßfühler mit dem zentralen Teil des Bolzens (100) in Kontakt steht und der andere Meßfühler mit dessen höherstehenden Fläche in Kontakt steht, wobei die zwei Meßfühler so angeordnet sind, daß die Differenzmessung der Dehnungsanzeigen der zwei Meßfühler die tatsächliche Dehnung des Bolzens darstellt.

9. Vorrichtung nach Anspruch 8, dadurch gekennzeichnet, daß die zwei Meßfühler mechanisch und thermisch gekoppelt sind.

10. Vorrichtung nach einem der Ansprüche 8 oder 9, dadurch gekennzeichnet, daß die Meßfühler (191, 192) aus einem Transformator (30) gebildet sind, versehen mit einer Primärwicklung (300), zwei identischen, gegenüberliegenden, in Reihe geschalteten Sekundärwicklungen und einem mit einem Kontaktfinger mechanisch einstückig ausgebildetem Tauchanker.

11. Vorrichtung nach Anspruch 8, dadurch gekennzeichnet, daß die Meßfühler (18, 19) mittels einer Meßzentrale (260) für die Dehnungen und die Drücke mit einer Zentraleinheit (24) verbunden sind, wobei die Meßzentrale für die Dehnungen und die Drücke folgendes umfaßt:

– eine Meßschaltung (261) für die Dehnungen, mit der die Meßfühler zum Messen der Dehnung verbunden sind,

– eine Meßschaltung (262) für den Druck, mit der die Meßfühler zum Messen des Drucks verbunden sind, wobei jede der vorgenannten Schaltungen Signal-Abtastmittel für die Analog-Digital-Umwandlung umfaßt, welche die von den Meßfühlern zum Messen von Dehnung und Druck abgegebenen Signale in digitaler Form abgeben,

– einen Multiplexer (263) zum sequenziellen Lesen vorgenannter digitaler Werte.

12. Vorrichtung nach Anspruch 11, dadurch gekennzeichnet, daß die Zentraleinheit einen Strukturspeicher umfaßt, der es ermöglicht, das Verfahren gemäß den folgenden Sequenzen durchzuführen:

– Darstellung einer Tabelle für den Operator, welche die Anfangswerte der Dehnungen und der Drücke und die programmierten Sollwerte von Dehnung und Druck anzeigt,

– Test durch ein Testprogramm für einwandfreies Funktionieren der Meßfühler und der Elemente, die die Durchführung des eigentlichen Anzieh- und/oder Lösevorganges ermöglichen, mit Analyse der von den Meßfühlern empfangenen Werte der Bolzendehnung und des angelegten Drucks, um diese Dehnung herbeizuführen, wobei das Anziehen und/oder das Lösen durch Regeln der Dehnung, die auf den Bolzen durch eine an diesen angelegte mechanische Spannung aufgebracht ist, auf einen Sollwert ausgeführt wird und eine Kontrolle durch Korrelation zwischen der angezeigten Dehnung und dem angelegten Druck, um besagte Dehnung herbeizuführen, ausgeführt wird,

– Darstellung und Speicherung der Werte der maximalen Dehnung und des Enddrucks, die für den betreffenden Bolzen erhalten werden,

– Verschieben der Mutter auf dem entsprechenden Bolzen bezüglich der Anziehfläche durch Fest- und/oder Losschrauben,

– Lösen der angelegten Spannung.

13. Vorrichtung nach Anspruch 12, dadurch gekennzeichnet, daß besagter Strukturspeicher von einem elektrisch programmierbaren Lesespeicher gebildet wird.

14. Vorrichtung nach einem der Ansprüche 12 oder 13, dadurch gekennzeichnet, daß außer den in Anspruch 12 definierten Sequenzen besagter Strukturspeicher die Durchführung besagten Verfahrens gemäß den Sequenzen der Ansprüche 2 bis 5 ermöglicht.

FIG.1

PARTIE A

A: Initialisation du système hydraulique
B: Réglages des capteurs
C: Cycle de serrage
D: Cycle de desserrage
E: Fin de programme

Matériel en configuration de stockage — 1

Mise sous tension Début — 2

Charg⁺ des prog Execution — 3

Entrées de :
- date
- code
- données — 4

MENU ECRAN — 5

6

Réponse

A  B  C  D  E

Remise en configuration de stockage

6A  Sous-prog. d'initialisation hydraulique

Sous prog. de réglage des capteurs d'allong⁺  6B

Lecture des capteurs d'allong⁺

Lecture des capteurs d'allong⁺

FIN

Pilotage manuel

Verification du fonctionnement des capteurs. Connexions internes

Réglage OK  oui

Réglage OK  oui

A ce stade on vérifie la présence d'air. Edition de messages d'erreurs si besoin

Vidange : O/F Pompe : M/A fin d'initialisation

Présentation de la liste des capteurs et de leurs réglages

non  non

8

Message d'erreur

non  Tous les capteurs réglés

non

9

Z

10

Demande de mise sur site  Z

Demande de mise sur site  Z

Mise en place puis validation par opérateur. Verification par capteur de proximité inductif et par lecture des capteurs d'allongement.

A  Edition du tableau des valeurs

Numéros de goujons
Allonge à 0
Pression à 0
Consignes d'allong⁺ aux valeurs programmées
Autres colonnes vides

A  Edition du tableau des valeurs

Numéros de goujons suivant trou de visite
Pression à 0
Consignes d'allong⁺ fixées à : ( Valeur maxi admissible - valeur résiduelle maxi ) - valeur programmée.

B  Début de serrage

Ordre operateur
Mise en marche de la pompe

B  Début de desserrage

Ordre operateur
Mise en marche de la pompe

a
b  Tableau des valeurs  c  7

d  e

EP 0 223 713 B1

EP 0 223 713 B1

**FIG_1**

EP 0 223 713 B1

FIG.2

FIG.3

FIG.4

FIG.5

FIG.6

EP 0 223 713 B1